# EUROPÄISCHE PATENTSCHRIFT

(11) **EP 2 835 043 B1**
(45) Veröffentlichungstag und Bekanntmachung des Hinweises auf die Patenterteilung: **08.04.2020**
(21) Anmeldenummer: 14178368.8
(22) Anmeldetag: 24.07.2014
(51) Int. Cl.: A01B 49/06

(54) **Gezogene landwirtschaftliche Bestellkombination und Verfahren zum Überführen einer landwirtschaftlichen Bestellkombination aus einer Transportposition in eine Arbeitsposition und umgekehrt**
Towed agricultural cultivating combination and method for transferring an agricultural cultivating combination from a transport position to a working position and vice versa
Semoir combiné agricole tracté et procédé de transfert d'un semoir combiné agricole d'une position de transport en position de travail et inversement

(30) Priorität: 24.07.2013 DE 102013214473
(43) Veröffentlichungstag der Anmeldung: 11.02.2015
(73) Patentinhaber: Horsch Maschinen GmbH, 92421 Schwandorf (DE)
(72) Erfinder: Horsch, Michael, 92421 Schwandorf (DE)
(74) Vertreter: Benninger, Johannes

(56) Entgegenhaltungen:
- DE-A1- 2 325 891
- DE-A1- 10 307 396
- DE-A1- 19 821 394
- DE-A1- 19 826 295

## Beschreibung

Die vorliegende Erfindung betrifft eine landwirtschaftliche Bestellkombination und ein Verfahren zum Überführen einer landwirtschaftlichen Bestellkombination aus einer Transportposition in eine Arbeitsposition und umgekehrt.

In der Landwirtschaft werden zahlreiche verschiedene Bodenbearbeitungsgeräte und Säkombinationen eingesetzt. Eine häufig verwendete Bauart solcher Geräte, die mittels einer Zugmaschine über den Acker gezogen werden, umfasst einen angehängten Rahmen mit eigenem Fahrwerk. Zur Bearbeitung des Bodens können an solche Maschinen verschiedenste Lockerungs- und/oder Schneidwerkzeuge angebaut werden. Derartige Bodenbearbeitungsgeräte können zudem mit nachfolgenden Packerwerkzeugen, denen ggf. Säeinheiten nachgeordnet sind, ausgestattet sein.

Darüber hinaus können die Bodenbearbeitungsgeräte große Arbeitsbreiten aufweisen. Hierbei sind die Maschinen meist so gestaltet, dass an einem Mittelteil seitliche Rahmen oder Sektionen angebracht sind. Zum Transport können bspw. Teile des Rahmens um horizontale Längsachsen verschwenkt werden, so dass die Baubreite der Maschine auf ein für die Straßenfahrt zulässiges Maß reduziert werden kann. Bei gezogenen landwirtschaftlichen Geräten zur Bodenbearbeitung oder Saat mit integrierten Packelementen gibt es verschiedene Varianten von Fahrwerken für diese Geräte, die für eine Straßenfahrt oder auch teilweise für den Wendevorgang im Feld notwendig sind. So gibt es Geräte, bei denen das Packerelement so ausgeführt ist, dass zumindest Teile dieses Packerelements gleichzeitig auch als Fahrwerkselement genutzt werden können. Oftmals sind solche Arten von Packerelementen aus Reifen gebildet, die sich gleichermaßen für eine Feldfahrt wie auch für einen Straßentransport eignen. Daneben gibt es jedoch auch zahlreiche andere Bauarten von Packerelementen.

Eine bevorzugte Bauart solcher Bodenbearbeitungsmaschinen sieht vor, dass die verschiedenen Lockerungs- und Schneidwerkzeuge, sowie die verschiedenen Säeinheiten möglichst vielseitig- bzw. variabel kombiniert werden können. Eine derartige Maschine beschreibt bspw. die DE 195 29 540 A1. Es wird eine Aufsattelmaschine beschrieben, welche aus einem Rahmen und einer Tragachse zusammengesetzt wird. Am Rahmen sind Hydraulikkraftheber bzw. Koppelpunkte angebracht, an denen diverse Arbeitswerkzeuge angebracht werden.

Eine weitere Ausführungsform eines Bodenbearbeitungsgerät mit verschiedenen Arbeitswerkzeugen gibt die EP 0 958 722 wieder; hierbei sind an einem Tragerahmen verschwenkbare Laufräder, verschiedene Bodenbearbeitungsgeräte und Säschare angeordnet. Hinter den Laufrädern ist eine Bodenwalze angeordnet, mit derer die Tiefeneinstellung des Bodenbearbeitungsgerät erfolgt. Um eine einfache Ausgestaltung zu erreichen, können bspw. die Bodenwalze oder die Bodenbearbeitungsgeräte mittels Parallelogramm angebracht sein.

Eine weitere Ausführungsform eines Bodenbearbeitungsgeräts ist durch die DE 198 21 394 A1 bekannt. Bei diesem Gerät sind dem Tragrahmen Laufräder zugeordnet, die mittels einer Hubeinrichtung gegenüber dem Tragrahmen in verschiedene Positionen verschwenkbar sind. Die Bestellkombination umfasst eine Bodenwalze, die an einem Rahmen drehbar angeordnet ist. Aufgrund einer Höhenverstelleinrichtung kann die Arbeitstiefe des Bodenbearbeitungsgeräts variabel verstellt werden. Während des Bearbeitungsvorgangs können die Laufräder in eine Transportposition angehoben werden.

Eine weitere Ausführungsform eines Bodenbearbeitungsgeräts ist durch die DE 198 26 295 A1 offenbart, bei welcher sich der Tragrahmen über Laufräder auf dem Boden abstützt. In Fahrtrichtung vor den Laufrädern ist eine motorisch angetriebene Bodenbearbeitungsmaschine angeordnet. In Fahrtrichtung hinter den Laufrädern ist eine Bodenwalze vorgesehen. Durch den Einsatz von hydraulischen Stellelementen können die Bodenbearbeitungsmaschine und die Bodenwalze angehoben bzw. abgesenkt werden.

Eine weitere Ausführungsform eines Bodenbearbeitungsgeräts ist durch die DE 103 07 396 A1 offenbart. Das Bodenbearbeitungsgerät umfasst eine Bodenwalze, welche einen Rahmen mit einem quer zur Fahrtrichtung laufenden Querbalken aufweist. Die Bodenwalze ist durch parallel zueinander angeordnete Reifenelemente gebildet, welche einzeln anhebbar und absenkbar sind. Hinter der Bodenwalze können Säschare angeordnet sein.

Neben den beschriebenen landwirtschaftlichen Maschinen sind aus dem Stand der Technik noch eine Vielzahl von weiteren Maschinen bekannt. Allen gemeinsam ist, dass diese jeweils einen Rahmen aufweisen, an dem an einem hinteren Teil ein Fahrwerk angebracht ist. Am Rahmen sind über diverse Koppelelemente Arbeitswerkzeuge, Packerwerkzeuge und Säelemente angebracht. Um die Tiefe zwischen den einzelnen Werkzeugen einfach verstellen zu können, werden diese häufig unter Verbindung mit Verstellmechanismen montiert.

Eine häufig vorkommende Kombination setzt sich wie folgt zusammen. An einem Maschinenrahmen sind zunächst Arbeitswerkzeuge angebracht; diesen folgt entweder ein Fahrwerk oder umgekehrt. An die Packerwerkzeuge oder an das Fahrwerk sind anschließend Säelemente oder Säschare angebracht. Mit Hilfe der Packerwerkzeuge wird die Maschine in Arbeitsposition in der Tiefe geführt, bzw. erfolgt mit Hilfe der Packerwerkzeuge die Tiefeneinstellung der Maschine. Als Packerwerkzeuge können verschiedenste Rückverfestigungswerkzeuge verwendet werden.

Der Nachteil derartiger Bodenbearbeitungskombinationen liegt darin, dass eine Überführung von einer Transportposition in eine Arbeitsposition und umgekehrt sehr aufwendig und umständlich ist.

Eine Aufgabe der vorliegenden Erfindung kann somit darin gesehen werden, eine Bestellkombination zur Verfügung zu stellen, welche auf einfache Art und Weise von einer Arbeitsposition in eine Transportposition und umgekehrt überführt werden kann. Weiter kann als Aufgabe der Erfindung gesehen werden, ein entsprechendes Verfahren zum einfachen Überführen einer Bestellkombination von einer Arbeitsposition in eine Transportposition und umgekehrt zur Verfügung zu stellen. Zudem soll das Überführen zeitoptimiert umgesetzt werden können und die Bestellkombination einen zumindest weitgehend einfachen Aufbau besitzen.

Die Aufgaben der Erfindung werden durch eine Vorrichtung mit den Merkmalen im Anspruch 1 sowie durch ein Verfahren mit den Merkmalen im Anspruch 9 gelöst. Vorteilhafte Ausführungsformen werden in den abhängigen Ansprüchen beschrieben.

Die erfindungsgemäße gezogene landwirtschaftliche Bestellkombination ist vorgesehen zur Bodenbearbeitung und/oder zum Ausbringen von Saatgut und/oder Dünger. Der Begriff "Bodenbearbeitung" ist im Zusammenhang mit vorliegender Erfindung breit zu verstehen und kann mitunter Arbeitsvorgänge umfassen, bei welchen Erdreiche verdichtet und/oder aufgelockert wird.

Die Bestellkombination besitzt einen Maschinenrahmen, mit welchem eine Aufhängung, bestehend aus mindestens einem Oberzug, mindestens einem Unterzug sowie einem sich senkrecht zur Fahrtrichtung der Bestellkombination erstreckenden Tragrahmen heb- und senkbar in Verbindung steht. An einem in Fahrtrichtung weisenden distalen Ende des Maschinenrahmens kann eine Zugdeichsel vorgesehen sein, mittels welcher die Bestellkombination an ein Zugfahrzeug koppelbar ist.

Weiter kann ein Vorratsspeicher für Saatgut und/oder Dünger fest mit dem Maschinenrahmen in Verbindung stehen und vom Maschinenrahmen getragen werden.

Zudem umfasst die gezogene landwirtschaftliche Bestellkombination ein oder mehrere mit dem Tragrahmen der Aufhängung verbundene Packereinheiten zur Verdichtung eines Erdreichs und ein oder mehrere den Packereinheiten in Fahrtrichtung nachgeordnete und mit dem Tragrahmen der Aufhängung verbundene Montagevorrichtungen, vermittels welchen ein oder mehrere Säeinheiten zur Verteilung von Saatgut und/oder Dünger auf dem Erdreich und/oder ein oder mehrere Werkzeuge zur Bearbeitung des Erdreichs mit dem Tragrahmen gekoppelt sind.

Die ein oder mehreren Packereinheiten und/oder die ein oder mehreren Säeinheiten und/oder Werkzeuge können starr mit dem Tragrahmen in Verbindung stehen bzw. starr am Tragrahmen gehalten werden.

Die ein oder mehreren Packereinheiten sind durch ein oder mehrere Packerreifen gebildet, die umlaufend das Erdreich unter Oberflächenkontakt verdichten.

In bevorzugten Ausführungsformen bestehen die ein oder mehreren Packereinheiten jedoch aus mehreren umlaufenden und mit dem Tragrahmen starr in Verbindung stehenden Packerreifen, die entlang des Tragrahmens zumindest näherungsweise vollständig über die gesamte Arbeitsbreite der Bestellkombination angeordnet sind.

Auch ist vorgesehen, dass der mindestens eine Oberzug und der mindestens eine Unterzug jeweils über Gelenke mit weitestgehend senkrecht zur Fahrtrichtung und parallele zueinander orientierten Drehachsen an den Maschinenrahmen und an den Tragrahmen derart gekoppelt sind, dass ein Heben und Senken der Aufhängung mit unveränderter Drehlage des Tragrahmens bewirkbar ist. Ein Heben und Senken der Aufhängung erfolgt demnach ohne Eigendrehung des Tragrahmens bzw. ohne Drehung des Tragrahmens um seine Längsachse.

Durch die starre Verbindung zwischen den ein oder mehreren Packereinheiten und dem Tragrahmen bzw. den ein oder mehreren Werkzeugen und/oder Säeinheiten und dem Tragrahmen sowie durch die unveränderte Drehlage bei Heben und Senken des Tragrahmens kann eine Relativbewegung der ein oder mehreren Packereinheiten zum Tragrahmen sowie eine Relativbewegung der ein oder mehreren Werkzeuge und/oder Säeinheiten zum Tragrahmen unterbunden werden. Eine bestimmte Ausrichtung der ein oder mehreren Packereinheiten und der ein oder mehreren Werkzeuge und/oder Säeinheiten zueinander kann somit bei Überführung der Bestellkombination von einer Transportposition in eine Arbeitsposition sowie vom Überführen aus der Arbeitsposition in die Transportposition im Wesentlichen beibehalten werden. Ein vereinfachter Übergang von der Transportposition in die Arbeitsposition sowie von der Arbeitsposition in die Transportposition wird hierdurch ermöglicht, ohne dass eine umfangreiche Neuausrichtung der ein oder mehren Packereinheiten und der ein oder mehreren Werkzeuge und/oder Säeinheiten in der jeweiligen Position erfolgen muss.

In besonders bevorzugten Ausführungsformen können der Oberzug und/oder der Unterzug durch wenigstens zwei parallel zueinander orientierte und miteinander mechanisch gekoppelte Tragarme ausgebildet sein. Beispielsweise kann zwischen den Tragarmen des Oberzugs und/oder zwischen den Tragarmen des Unterzugs jeweils mindestens eine Brücke verlaufen, welche die mindestens zwei Tragarme des Oberzugs bzw. die mindestens zwei Tragarme des Unterzugs miteinander verbindet. Die Längsachse der jeweiligen Brücke kann hierbei senkrecht zur Fahrtrichtung der Bestellkombination bzw. orthogonal zu den jeweiligen mindestens zwei Tragarmen orientiert sein.

Die Erfindung ist hierbei nicht auf die Verwendung eines Unterzugs und eines Oberzuges beschränkt. Auch kann es sein, dass einem Tragrahmen mehrere Unterzüge und/oder mehrere Oberzüge zugeordnet sind. Auch können mehrere Tragrahmen vorgesehen sein, mit welchen jeweils ein oder mehrere Werkzeuge und/oder Säeinheiten und ein oder mehrere Packeinheiten starr in Verbindung stehen, wobei die mehreren Tragrahmen zumindest anteilig unabhängig voneinander über einen oder mehrere jeweils zugeordnete Oberzüge und Unterzüge heb- und senkbar sind.

Vorstellbar ist zudem, dass das Heben und Senken der Aufhängung durch wenigstens ein Stellglied erfolgt. Das wenigstens eine Stellglied kann an den Oberzug und/oder den Unterzug gekoppelt sein. In der Praxis haben sich Ausführungsformen bewährt, bei welchen das wenigstens eine Stellglied zum Heben und Senken der Aufhängung an den Unterzug sowie den Maschinenrahmen gekoppelt ist. Insbesondere können mindestens zwei parallel zueinander ausgerichtete Stellglieder vorgesehen sein, welche jeweils an den Unterzug und an den Maschinenrahmen gekoppelt sind. Die mindestens zwei parallel zueinander ausgerichteten Stellglieder können mit einer Steuerungseinrichtung in Verbindung stehen, welche zum Heben und Senken der Aufhängung bzw. des Tragrahmens die mindestens zwei Stellglieder zeitsynchron betätigt.

Denkbar ist zudem, dass die ein oder mehreren Packereinheiten aus mehreren umlaufenden und mit dem Tragrahmen starr in Verbindung stehenden Packerreifen bestehen, die entlang des Tragrahmens zumindest näherungsweise vollständig über die gesamte Arbeitsbreite der Bestellkombination angeordnet sind. Die Drehachsen mehrerer und vorzugsweise sämtlicher Packerreifen können senkrecht zur Fahrtrichtung der Bestellkombination orientiert sein und miteinander fluchten. Somit können mehrere und vorzugsweise sämtliche Packerreifen auf einer gemeinsamen und lotrecht zur Fahrtrichtung der Bestellkombination orientierten Laufachse angeordnet sein.

Erfindungsgemäß ist vorgesehen, dass die Bestellkombination vermittels einer Senkbewegung der Aufhängung in eine Transportposition überführbar ist, wobei ein oder mehrere Packereinheiten bei eingenommener Transportposition mit einer Bodenfläche in Kontakt stehen und als Reifen für eine Straßenfahrt der Bestellkombination ausgebildet sind und wobei die ein oder mehreren Säeinheiten und/oder die ein oder mehreren Werkzeuge bei eingenommener Transportposition gegenüber der Bodenfläche angehoben sind, so dass sie keinen Kontakt zur Bodenfläche besitzen.

Hierbei stehen die ein oder mehrere Packereinheiten als ein oder mehrere umlaufende Reifen zur tragenden Bewegung der Bestellkombination mit einer Bodenfläche in Kontakt. Auch können die Packereinheiten bzw. die Reifen bei Senkbewegung den Maschinenrahmen gegenüber einer Bodenfläche anheben. Wie nachfolgend noch weiter beschrieben, können mit dem Maschinenrahmen Arbeitswerkzeuge in Verbindung stehen, die somit bei Senkbewegung der Aufhängung bzw. der als Reifen ausgebildeten Packereinheiten gegenüber der Bodenfläche zusammen mit dem Maschinenrahmen angehoben werden. Hierbei können die Arbeitswerkzeuge ihren Kontakt zur Bodenfläche verlieren. Wurde die Bestellkombination sodann vollständig in die Transportposition überführt, sind die Arbeitswerkzeuge oberhalb einer Bodenfläche angeordnet, so dass die Bestellkombination während einer Straßenfahrt bewegt bzw. gezogen werden kann, ohne dass die Arbeitswerkzeuge den bei einer Feldfahrt vorgesehen Kontakt zur Bodenfläche besitzen.

Weiter kann vorgesehen sein, dass die ein oder mehreren Werkzeuge und/oder Säeinheiten und/oder die ein oder mehreren Packereinheiten mit einem oder mehreren Stellgliedern in Wirkverbindung gebracht sind, via welche ein oder mehreren Stellglieder eine Höhendifferenz der einen oder mehreren Werkzeuge und/oder Säeinheiten gegenüber den ein oder mehreren Packereinheiten definiert vorgebbar ist. Beispielsweise können ein oder mehrere Werkzeuge und/oder Säeinheiten mechanisch an eine parallel zur Längsrichtung des Tragrahmens orientierte Drehachse gekoppelt sein. Weiter kann über die ein oder mehreren Stellglieder zum Zwecke einer Variation der Höhendifferenz eine Rotation der Drehachse mit einhergehender Schwenkbewegung der jeweiligen ein oder mehreren an die Drehachse gekoppelten Werkzeuge und/oder Säeinheiten bewirkt werden. Die ein oder mehreren Werkzeuge und/oder Säeinheiten können über einen jeweils zugeordneten Hebelarm starr an der Drehachse angelenkt sein. Die ein oder mehreren Stellglieder können beispielsweise durch hydraulische und/oder pneumatische Zylinder ausgebildet sein. Insbesondere kann es sein, dass wenigstens ein Stellglied eine Rotation der Drehachse mit erster Drehrichtung bewirkt und wenigstens ein weiteres Stellglied eine Rotation der Drehachse mit zweiter Drehrichtung bewirkt, welche zweite Drehrichtung gegensinnig zur ersten Drehrichtung orientiert ist. Die ein oder mehreren Stellglieder können mit einer Steuerungseinrichtung in Verbindung stehen, so dass via die Steuerungseinrichtung die Höhendifferenz zwischen den ein oder mehreren Werkzeugen und/oder Säeinheiten und den ein oder mehreren Packereinheiten vorgebbar ist.

Weiter kann vorgesehen sein, dass die ein oder mehreren Werkzeuge und/oder Säeinheiten abnehmbar an der Bestellkombination gehalten sind. Insbesondere kann es sein, dass eine oder mehrere Werkzeuge und/oder Säeinheiten einzeln abnehmbar an der Bestellkombination gehalten sind. Bei Defekt und/oder Verschleiß einer oder mehrerer Werkzeuge und/oder Säeinheiten kann hierbei auf einfache und unkomplizierte Art und Weise ein Austausch der jeweiligen ein oder mehreren Werkzeuge und/oder Säeinheiten erfolgen.

Wie vorhergehend bereits erwähnt, kann die Bestellkombination ein oder mehrere Arbeitswerkzeuge zur Lockerung des Erdreichs umfassen, welche ein oder mehreren Arbeitswerkzeuge an den Maschinenrahmen gekoppelt sind und den ein oder mehreren Packereinheiten in Fahrtrichtung vorgeordnet sind. Die ein oder mehreren Arbeitswerkzeuge können somit der Aufhängung in Fahrtrichtung der Bestellkombination vorgeordnet sein. Insbesondere können die ein oder mehreren Arbeitswerkzeuge durch Zinken- und/oder Schneidwerkzeuge ausgebildet sein, die ggf. in ein oder mehreren schräg zur Fahrtrichtung der Bestellkombination orientierten Reihen benachbart zueinander positioniert sind.

Insbesondere kann eine sich senkrecht zur Fahrtrichtung erstreckende Stützkonstruktion vorgesehen sein, welche fest mit dem Maschinenrahmen verbunden ist. Die ein oder mehreren Arbeitswerkzeuge können an der Stützkonstruktion fixiert sein. In Transportposition der Bestellkombination können die ein oder mehreren Arbeitswerkzeuge hängend von der Stützkonstruktion getragen werden und hierbei keinen Kontakt zur Bodenfläche besitzen. Die Bestellkombination kann wenigstens zwei Reihen an Arbeitswerkzeugen besitzen, wobei eine der Reihen einer weiteren Reihe in Fahrtrichtung der Bestellkombination nachläuft und jede Reihe mindestens zwei Arbeitswerkzeuge umfasst.

Die vorliegende Erfindung betrifft darüber hinaus ein Verfahren zum Überführen einer gemäß einem der Ansprüche 1 bis 8 gebildeten landwirtschaftlichen Bestellkombination aus einer Transportposition in eine Arbeitsposition und umgekehrt. Vorab sei erwähnt, dass Merkmale, welche zur erfindungsgemäßen Bestellkombination bereits genannt wurden, ebenso Bestandteil bei diversen Ausführungsformen des erfindungsgemäßen Verfahrens sein können. Weiter können Merkmale, welche nachfolgend zu diversen Ausführungsformen des erfindungsgemäßen Verfahrens genannt werden, bei denkbaren Ausführungsformen der erfindungsgemäßen Vorrichtung vorhanden sein.

Das Verfahren ist vorgesehen zum Überführen einer landwirtschaftlichen Bestellkombination aus einer Transportposition in eine Arbeitsposition und umgekehrt. Bei Transportposition kann die Bestellkombination über eine Straße bewegt werden, bei Arbeitsposition wird die Bestellkombination zum Zwecke einer Bodenbearbeitung über eine landwirtschaftliche Fläche bewegt.

Die Bestellkombination für das erfindungsgemäße Verfahren besitzt ein oder mehrere Packereinheiten zur Verdichtung einer Bodenfläche und ein oder mehrere den Packereinheiten in Fahrtrichtung nachgeordnete Werkzeuge und/oder Säeinheiten zur Verteilung von Saatgut und/oder Dünger. Die ein oder mehreren Werkzeuge und/oder Säeinheiten besitzen gegenüber den ein oder mehreren Packereinheiten eine bestimmte Höhendifferenz. Das Überführen in die Arbeits- oder Transportposition und umgekehrt erfolgt durch ein jeweiliges gemeinsames Heben- oder Senken der ein oder mehreren Packereinheiten zusammen mit den ein oder mehreren Werkzeugen und/oder Säeinheiten, bei bzw. während welchem jeweiligen gemeinsamen Heben oder Senken die jeweilige bestimmte Höhendifferenz zwischen den ein oder mehreren Packereinheiten und den ein oder mehreren Werkzeugen und/oder Säeinheiten zumindest weitgehend unverändert oder annähernd beibehalten wird.

Insbesondere kann es sein, dass die Bestellkombination durch ein gemeinsames Senken der ein oder mehreren Packereinheiten zusammen mit den ein oder mehreren Werkzeugen und/oder Säeinheiten in die Transportposition überführbar ist, wobei in der Transportposition eine oder mehrere der Packereinheiten als Reifen zur tragenden Führung der Bestellkombination mit einer Bodenfläche in Kontakt stehen. Die als Reifen ausgebildeten Packereinheiten können somit bei einer Straßenfahrt der Bestellkombination mit der Straße in Oberflächenkontakt stehen und eine Masse der Bestellkombination zumindest anteilig tragen.

Auch kann es sein, dass die bestimmte Höhendifferenz zwischen den ein oder mehreren Packereinheiten und den ein oder mehreren Werkzeugen und/oder Säeinheiten durch ein oder mehrere Stellglieder definiert vorgegeben wird. So kann es sein, dass vor und/oder während einem Überführen der Bestellkombination in die Transportposition eine Vergrößerung der Höhendifferenz zwischen den ein oder mehreren Werkzeuge und/oder Säeinheiten und den ein oder mehreren Packereinheiten durch die ein oder mehreren Stellglieder bewirkt wird. Hierdurch kann sichergestellt werden, dass die ein oder mehreren Werkzeuge und/oder Säeinheiten während einer Straßenfahrt der Bestellkombination nicht mit der Straße in Oberflächenkontakt stehen. Die Vergrößerung der Höhendifferenz kann für sämtliche der ein oder mehreren Werkzeuge und/oder Säeinheiten via eine Drehbewegung der ein oder mehreren Werkzeuge und/oder Säeinheiten um eine gemeinsame Drehachse erfolgen, die eine lotrechte Orientierung zur Fahrtrichtung der Bestellkombination besitzt.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind..
Fig. 1 zeigt drei schematische Ansichten einer Ausführungsvariante einer erfindungsgemäßen landwirtschaftlichen Bestellkombination, wobei hierbei die Fig. 1a eine schematische Perspektivansicht, die Fig. 1b eine schematische Seitenansicht in Transportstellung und die Fig. 1c eine schematische Seitenansicht in einer Arbeitsstellung, zeigen;
Fig. 2 zeigt zwei schematische Seitenansichten einer Ausführungsvariante einer erfindungsgemäßen landwirtschaftlichen Bestellkombination ohne Säeinheiten;
Fig. 3 zeigt eine schematische Seitenansicht einer weiteren Ausführungsvariante einer erfindungsgemäßen landwirtschaftlichen Bestellkombination.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

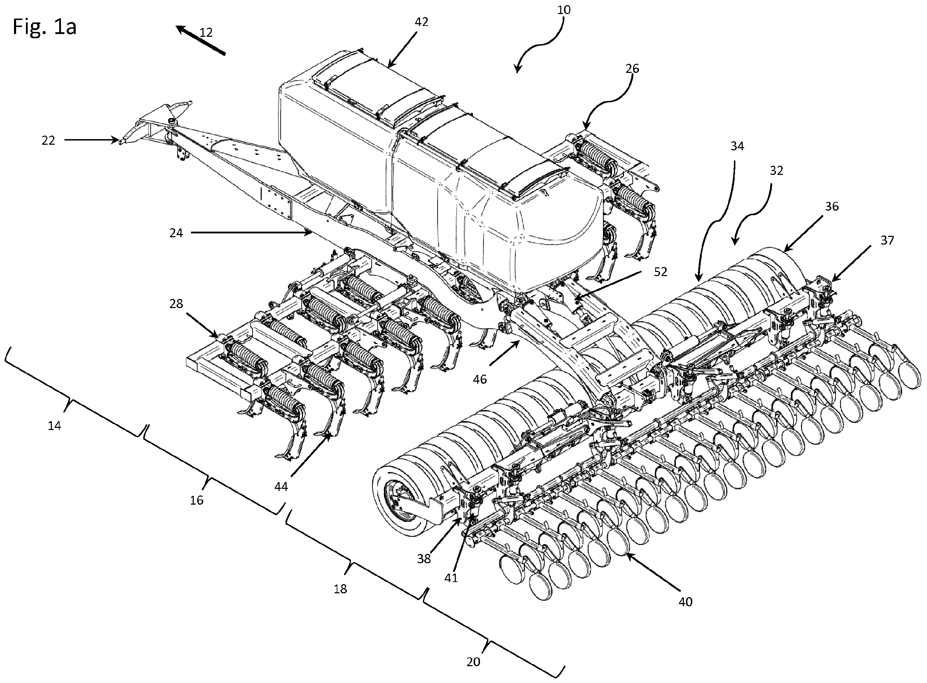

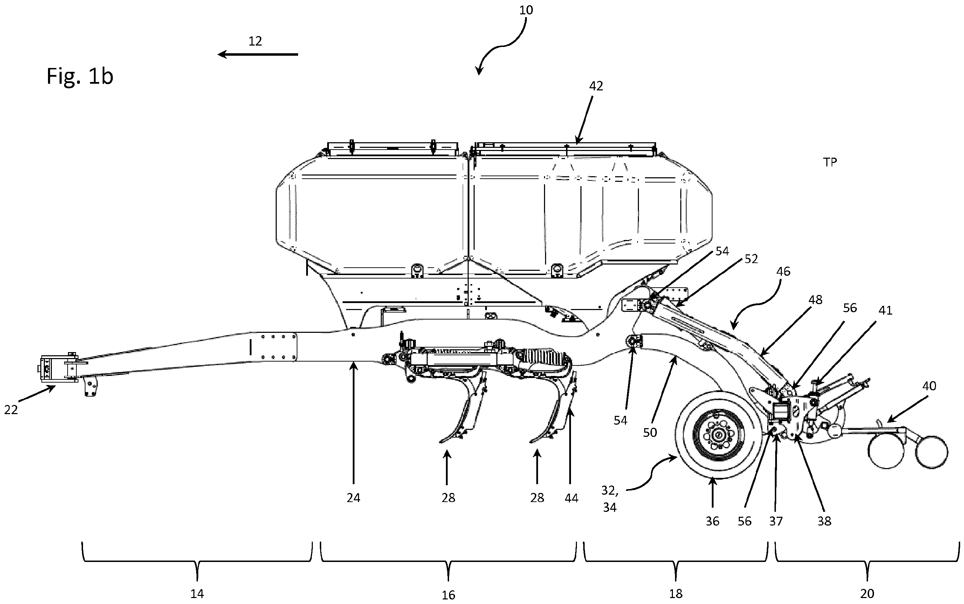

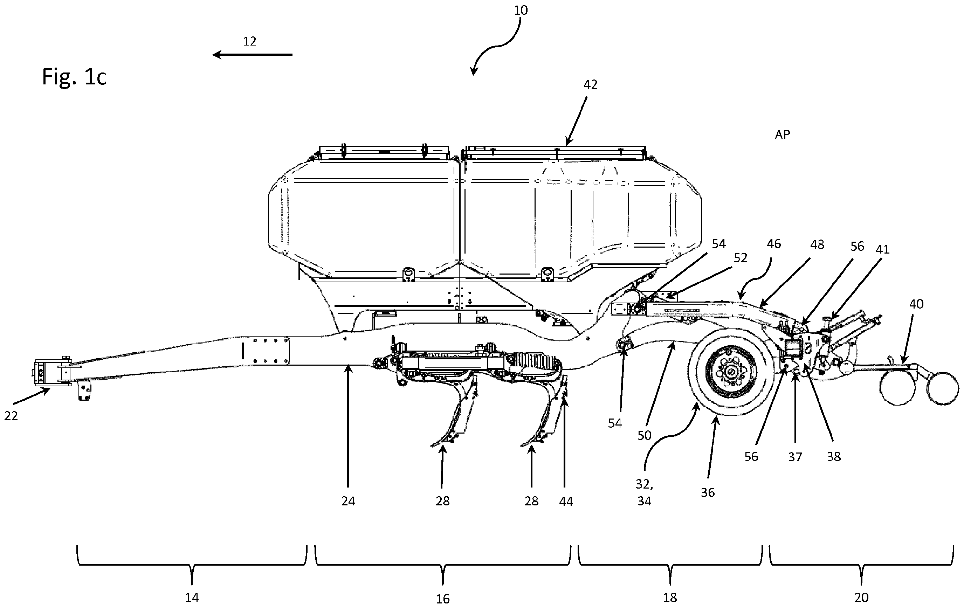

Die drei schematischen Ansichten der **Fig. 1a** (perspektivische Ansicht von schräg oben), der **Fig. 1b** (Seitenansicht in Transportstellung TP) und der **Fig. 1c** (Seitenansicht in Arbeitsstellung AP) zeigen eine erste Ausführungsform einer erfindungsgemäßen landwirtschaftlichen Bestellkombination 10.

Die landwirtschaftliche Bestellkombination 10 umfasst in Fahrtrichtung 12 im Wesentlichen vier hintereinander angeordnete Maschinenbereiche bzw. Abschnitte, nämlich einen Deichselabschnitt 14, einen Bodenbearbeitungsabschnitt 16, einen Packerabschnitt 18 und einen Säabschnitt 20. Im Bereich des Deichselabschnittes 14 besitzt die Bestellkombination 10 eine Zugdeichsel 22, die an einem distalen Ende eines Maschinenrahmens 24 angeordnet ist und via welche die Bestellkombination 10 an ein in Figur 1 nicht mit dargestelltes Zugfahrzeug koppelbar ist.

Mit dem Maschinenrahmen 24 ist eine sich orthogonal zur Fahrtrichtung 12 erstreckende Stützkonstruktion 26 verbunden, welche mehrere Zinkenwerkzeuge 28 trägt, die der Bodenbearbeitung dienen, bspw. der Strohzerkleinerung und/oder der Zerkrümelung des Erdreichs. Der Bodenbearbeitungsabschnitt 16 der Bestellkombination 10 ist im gezeigten Ausführungsbeispiel als zweireihiges Zinkenfeld ausgebildet.

In Fahrtrichtung 12 ist den beiden parallelen Reihen an Zinkenwerkzeugen 28 bzw. der Stützkonstruktion 26 eine Packereinheit 32 mit einer Packerwalze 34 nachgeordnet, die aus einer Vielzahl von eng nebeneinander angeordneten Packerreifen 36 gebildet ist. Im gezeigten Ausführungsbeispiel besteht die Packerwalze 34 der Packereinheit 32 aus insgesamt zwanzig einzelnen Packerreifen 36, die auf eine Gesamtbreit der Bestellkombination 10 von ca. sechs Metern verteilt sein können.

Die Packereinheit 32 bzw. die Packerwalze 34 steht starr mit einem Tragrahmen 37 in Verbindung bzw. ist starr an einem Tragrahmen 37 angelenkt. Am Tragrahmen 37 sind heckseitig Montagevorrichtungen 38 angebracht, an denen Säeinheiten 40 abnehmbar gehalten sind. Im gezeigten Beispiel sind diese Säeinheiten 40 als sog. Doppelscheibenschare ausgeführt. Es wären aber auch Säeinheiten 40 vorstellbar, die als autonome oder teilautonome Einzelkornsäaggregate ausgebildet sind. Auch andere Ausbringwerkzeuge sind denkbar, bspw. Düngerstreuer o. dgl., was jedoch für die Funktion der vorliegenden Erfindung von untergeordneter Bedeutung ist.

Im aufgeführten Beispiel der Figuren 1a bis 1c sind zwischen dem Tragrahmen 37 und den Säeinheiten 40 zusätzliche Hydraulikzylinder 41 angebracht, mittels derer eine Höhendifferenz zwischen der Packereinheit 32 und den Säeinheiten 40 und somit ggf. die Arbeitstiefe der Säeinheiten 40 separat eingestellt werden kann; somit ist es mit den Hydraulikzylindern 41 möglich, die Säeinheiten 40 unabhängig von der Packerwalze 34 verschwenken zu können, was bei einigen Ausführungsformen der Säeinheiten 40 erforderlich sein kann. Beispielsweise kann es sein, dass eine Höhendifferenz zwischen den Säeinheitne 40 und der Packereinheit 32 während oder nach einem Überführen der Bestellkombination in die Transportposition TB vergrößert wird. Als Montagevorrichtungen 38 wären diverse Elemente vorstellbar, bspw. Flanschbleche oder dgl.; aber auch eine Anbindung mittels Dreipunkts wäre vorstellbar.

Die Versorgung der Säeinheiten 40 mit dem auszubringenden Saatgut kann bspw. mittels eines, auf dem Maschinenrahmen 24 montierten, zentralen Vorratsbehälter 42 erfolgen. Hierfür sind den jeweiligen Säeinheiten 40 hier nicht dargestellte Versorgungsleitungen zugeordnet, mit denen eine Verbindung zwischen einer dem Vorratsbehälter 42 zugeordneten Dosiervorrichtung und den Säeinheiten 40 hergestellt wird.

Im aufgeführten Beispiel der Figuren 1a bis 1c ist der Vorratsbehälter 42 zweigeteilt, um mit diesem zwei verschiedene Saatgutarten ausbringen zu können. So sind an den Arbeitswerkzeugen bzw. Zinkenwerkzeugen 28 jeweils Saatguteinleger 44 angebracht, mittels derer auch mit den Zinkenwerkzeugen 28 Saatgut oder Dünger ausgebracht werden kann. Eine hierbei übliche Anordnung sieht vor, dass mit den Zinkenwerkzeugen 28 Dünger und mit den Säeinheiten 40 Saatgut ausgebracht wird. Aber auch andere Kombinationen wären vorstellbar.

In einer bevorzugten Ausführungsform der erfindungsgemäßen landwirtschaftlichen Bestellkombination 10 werden die Zinkenwerkzeuge 28, die Reifenelemente 36 und die Säeinheiten 40 so angeordnet, dass diese jeweils in Fahrtrichtung 12 in einer Reihe miteinander fluchten; eine derartige Anordnung gibt bspw. auch die Fig. 1a wieder. Es wären aber auch andere Werkzeuganordnungen möglich, so dass bspw. die Säeinheiten 40 zu den Zinkenwerkzeugen 28 in Fahrtrichtung seitlich versetzt sind. Die Anordnungen können auf verschiedenste Weise erfolgen.

Um eine große Variabilität der Anordnung von Zinkenwerkzeugen 28 und Schneidwerkzeugen 30 sowie der Säeinheiten 40 zu schaffen, erfolgt das Verschwenken der Packereinheit 32 mittels einer Aufhängung 46, die als Parallelogramm ausgebildet ist. Der Aufhängung 46 sind mehrere Stellglieder 52 zugeordnet, mittels derer die Packereinheit 32 zwischen einer ersten Transportposition TP (vgl. Figur 1b) und einer Arbeitsposition AP (vgl. Figur 1c) relativ zum Maschinenrahmen 24 verschwenkt wird.

Die Packerwalze 34 ist aus Reifenelementen 36 gebildet, die so gestaltet sind, dass diese sowohl bei Straßenfahrt und hierbei eingenommener Transportposition TP der Bestellkombination 10 als auch bei Arbeiten im Feld und hierbei eingenommener Arbeitsposition AP der Bestellkombination 10 mit einer Bodenfläche in Kontakt stehen und die Masse der Bestellkombination 10 zumindest anteilig tragen. Im dargestellten Beispiel wurden Reifenelemente 36 verwendet, es wären darüber hinaus jedoch auch andere Packerelemente bzw. Packerwalzen vorstellbar.

Die Aufhängung 46 besteht aus einem Oberzug 48 und einem Unterzug 50, wobei beide, jeweils in Fahrtrichtung 12, in einem vorderen Bereich mit dem Maschinenrahmen 24 verbunden sind. Weiter sind sowohl der Oberzug 48 als auch der Unterzug 50 in einem in Fahrtrichtung hinteren Bereich über Gelenke 56 mit dem Tragrahmen 37 verbunden. Mit dem Maschinenrahmen 24 und dem Unterzug 50 stehen zwei Stellglieder 52 in Verbindung, mittels derer die Aufhängung 46 bzw. die Packereinheit 32 sowie die Säeinheiten 40 gemeinsam verschwenkt werden können.

Wenn an dieser Stelle generell von einer hydraulischen Wirkungsweise der Stellglieder 52 die Rede ist, so ist dies keineswegs einschränkend, sondern nur beispielhaft zur Verdeutlichung der Funktionsweise des Ausführungsbeispiels zu verstehen. Selbstverständlich sind zahlreiche alternative Wirkungsprinzipien anwendbar, so bspw. eine mechanische Verstellung mittels Spindelantrieb o. dgl., oder eine elektromotorische Verstellung. Auch eine mechanische Verstellbarkeit mit Koppelstangen und/oder einer geeigneten Kraftübersetzung ist möglich.

Durch das erfindungsgemäße Verschwenken der Packereinheit 32 der Aufhängung 46 sowie ihre starre Koppelung an den Tragrahmen 37 ergibt sich u. a. der Vorteil, dass der Tragrahmen 37 bzw. die Maschine 10 unabhängig von der jeweiligen Position der Stellglieder 52 über den gesamten Schwenkbereich der Packereinheit 32 nahezu waagrecht steht, bzw. dass der Packerrahmen 37 immer nahezu parallel zur Bodenoberfläche ausgerichtet ist. Wodurch wiederum die Anbindung bzw. die Montage von verschiedensten Säeinheiten 40 oder Zinken- und Schneidwerkzeugen 28, 30 ohne zusätzliche Verstellelemente ermöglicht wird.

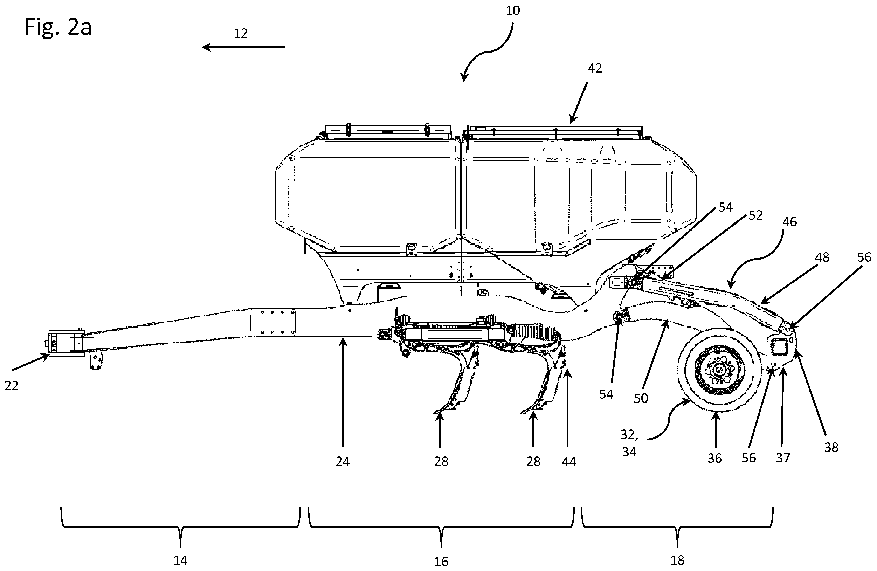

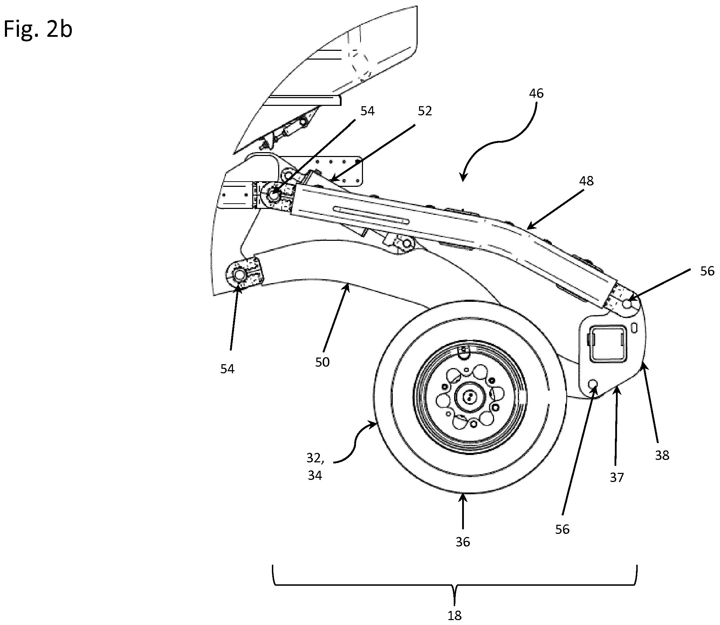

Während die Figuren 1a bis 1c jeweils eine Bestellkombination 10 mit Säeinheiten 40 zeigen, sind in Figur 2 aus Gründen der Übersichtlichkeit die Säeinheiten 40 nicht mit dargestellt. Die Bestellkombination 10 besteht, wie auch in Figur 2 zu erkennen, aus einem Deichselabschnitt 14, einem Bodenbearbeitungsabschnitt 16 und einem, über eine Aufhängung 46 verschwenkbaren Packerabschnitt 18. Die jeweiligen Abschnitte werden mit einem Maschinenrahmen 24 verbunden, bzw. werden an diesem die Elemente der jeweiligen Abschnitte angebracht. Zusätzlich ist auf dem Maschinenrahmen 24 ein Vorratsbehälter 42 angebracht, in dem das auszubringende Saatgut oder der auszubringende Dünger mitgeführt wird. Als Bodenbearbeitungswerkzeuge sind Zinkenwerkzeuge 28 in zwei parallelen Reihen am Mittelrahmen 24 angebracht. An den Zinkenwerkzeugen 28 sind Saatguteinleger 44 angebracht, mittels derer das auszubringende Saatgut bzw. der auszubringende Dünger in den Boden abgelegt werden kann. Hierzu sind den jeweiligen Saatguteinlegern 44, hier nicht dargestellte Versorgungsleitungen zugeordnet, mit denen eine Verbindung zwischen einer dem Vorratsbehälter 42 zugeordneten Dosiervorrichtung und den Saatguteinlegern 44 hergestellt wird.

Die Aufhängung 46 besteht aus einem Oberzug 48 und einem Unterzug 50, wobei diese jeweils in Fahrtrichtung 12 in einem vorderen Bereich mittels Gelenken 54 mit dem Maschinenrahmen 24 und im hinteren Bereich mittels Gelenken 56 mit dem Tragrahmen 37 verbunden sind. Zwischen dem Maschinenrahmen 24 und dem Unterzug 50 sind zwei Stellglieder 52 angebracht, mittels derer die Aufhängung 46 bzw. die Packereinheit 32 verschwenkt werden kann.

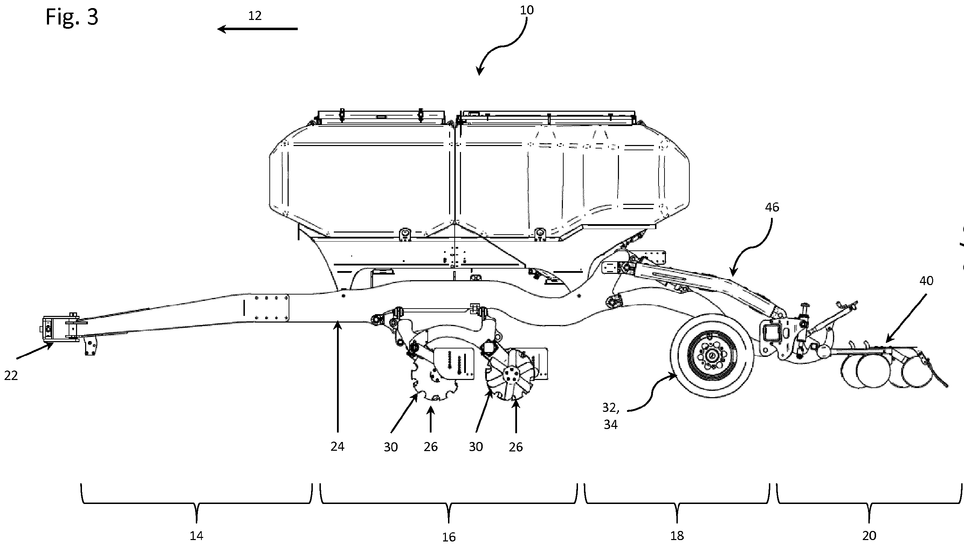

Die schematische Seitenansicht der Figur 3 zeigt ein weiteres Ausführungsbeispiel der erfindungsgemäßen Bestellkombination 10. Der Bodenbearbeitungsabschnitt 16 umfasst umlaufende Schneidwerkzeuge 30. Die Schneidwerkzeuge 30 sind in zwei parallelen Reihen 26 am Mittelrahmen 24 zueinander so angeordnet, dass diese eine sog. Scheibenegge bilden.

Es sei hierbei noch erwähnt, dass die erfindungsgemäße Bestellkombination 10 nicht zwingend mit einem Versorgungsbehälter 42 ausgestattet sein muss, sowie dass die Zinkenwerkzeuge 28 bzw. die Schneidwerkzeuge 30 nicht zwingend mit Saatguteinlegern 44 ausgestattet sein müssen. Auch andere Kombinationen des Bodenbearbeitungsabschnitt 16 und des Säabschnittes 20 wären durchaus vorstellbar.

Bei den Ausführungsformen einer erfindungsgemäßen Bereitstellkombination 10, wie in den Figuren 1a bis 3 beschrieben, ist zwischen einem Maschinenrahmen 24 und einem Packerrahmen 37 eine Aufhängung 46 angeordnet. Es wäre jedoch auch vorstellbar, dass die Bestellkombination 10 mehrere derartige Aufhängungen 46 aufweist, insbesondere bei Bestellkombination 10 mit größerer Arbeitsbreite und verschwenkbaren Sektionen könnte dies der Fall sein. Die Funktionsweise der Aufhängugen 46 bleibt hierbei jedoch identisch.

Die Erfindung wurde unter Bezugnahme auf eine bevorzugte Ausführungsform beschrieben. Es ist jedoch für den Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Landwirtschaftliche Bestellkombination
- 12: Fahrtrichtung
- 14: Deichselabschnitt
- 16: Bodenbearbeitungsabschnitt
- 18: Packerabschnitt
- 22: Zugdeichsel
- 24: Maschinenrahmen
- 26: Stützkonstruktion
- 28: Zinken
- 30: Schneidwerkzeug
- 32: Packereinheit
- 34: Packerwalze
- 36: Packerreifen
- 37: Tragrahmen
- 38: Montagevorrichtung
- 40: Säeinheit
- 41: Hydraulikzylinder
- 42: Vorratsbehälter
- 44: Saatguteinleger
- 46: Aufhängung
- 48: Oberzug
- 50: Unterzug
- 52: Stellglied
- 54: Gelenk
- 56: Gelenk
- AP: Arbeitsposition
- TP: Transportposition

## Patentansprüche

1. Gezogene landwirtschaftliche Bestellkombination (10) zur Bodenbearbeitung und/oder zum Ausbringen von Saatgut und/oder Dünger, umfassend
- einen Maschinenrahmen (24), mit welchem eine als Parallelogramm ausgebildete Aufhängung (46), bestehend aus mindestens einem Oberzug (48), mindestens einem Unterzug (50) sowie einem sich senkrecht zur Fahrtrichtung (12) der Bestellkombination (10) erstreckenden Tragrahmen (37), heb- und senkbar in Verbindung steht sowie
- ein oder mehrere mit dem Tragrahmen (37) der Aufhängung (46) verbundene Packereinheiten (32) zur Verdichtung eines Erdreichs und ein oder mehrere den Packereinheiten (32) in Fahrtrichtung (12) nachgeordnete und mit dem Tragrahmen (37) der Aufhängung (46) verbundene Montagevorrichtungen (38), vermittels welchen ein oder mehrere Säeinheiten (40) zur Verteilung von Saatgut und/oder Dünger auf dem Erdreich und/oder ein oder mehrere Werkzeuge zur Bearbeitung des Erdreichs mit dem Tragrahmen (37) gekoppelt sind,
wobei der mindestens eine Oberzug (48) und der mindestens eine Unterzug (50) jeweils über Gelenke (54, 56) mit weitestgehend senkrecht zur Fahrtrichtung (12) und parallel zueinander orientierten Drehachsen an den Maschinenrahmen (24) und an den Tragrahmen (37) derart gekoppelt sind, dass ein Heben und Senken der Aufhängung (46) mittels wenigstens eines Stellgliedes mit zumindest weitestgehend unveränderter Drehlage des Tragrahmens (37) bewirkbar ist,
**dadurch gekennzeichnet, dass** die Bestellkombination (10) über eine Senkbewegung der Aufhängung (46) in eine Transportposition (TP) überführbar ist, wobei ein oder mehrere Packereinheiten (32) bei eingenommener Transportposition (TP) mit einer Bodenfläche in Kontakt stehen und als Reifen für eine Straßenfahrt der Bestellkombination (10) ausgebildet sind und wobei die ein oder mehreren Säeinheiten (40) und/oder die ein oder mehreren Werkzeuge bei eingenommener Transportposition (TP) gegenüber der Bodenfläche anhebbar sind, so dass sie keinen Kontakt zur Bodenfläche besitzen und
wobei die ein oder mehreren Packereinheiten (32) als ein oder mehrere umlaufende und mit dem Tragrahmen (37) starr in Verbindung stehende Packerreifen (36) zur tragenden Bewegung der Bestellkombination (10) mit einer Bodenfläche in Kontakt stehen.

2. Bestellkombination nach Anspruch 1, bei welcher die ein oder mehreren Packereinheiten (32) und/oder die ein oder mehreren Säeinheiten (40) und/oder Werkzeuge starr mit dem Tragrahmen (37) in Verbindung stehen oder bei welcher die ein oder mehreren Packereinheiten (32) und/oder die ein oder mehreren Säeinheiten (40) und/oder Werkzeuge schwenkbeweglich mit dem Tragrahmen (37) in Verbindung stehen.

3. Bestellkombination nach Anspruch 1 oder 2, bei welcher der Oberzug (48) und/oder der Unterzug (50) durch wenigstens zwei parallel zueinander orientierte und miteinander mechanisch gekoppelte Tragarme gebildet ist.

4. Bestellkombination nach einem oder mehreren der Ansprüche 1 bis 3, bei welcher wenigstens ein Stellglied (52) zum Heben und Senken der Aufhängung (46) an den Unterzug (50) und/oder den Oberzug (48) und/oder an den Tragrahmen (37) sowie den Maschinenrahmen (24) gekoppelt ist.

5. Bestellkombination nach Anspruch 4, bei welcher die Packerreifen (36) auf einer gemeinsamen und lotrecht zur Fahrtrichtung (12) der Bestellkombination (10) orientierten Laufachse angeordnet sind.

6. Bestellkombination nach einem oder mehreren der Ansprüche 1 bis 5, bei welcher die ein oder mehreren Werkzeuge und/oder Säeinheiten (40) und/oder die ein oder mehreren Packereinheiten (32) mit einem oder mehreren Stellgliedern (41) in Wirkverbindung gebracht sind, via welche ein oder mehreren Stellglieder (41) eine Höhendifferenz der einen oder mehreren Werkzeuge und/oder Säeinheiten (40) gegenüber den ein oder mehreren Packereinheiten (32) definiert vorgebbar ist.

7. Bestellkombination nach einem oder mehreren der Ansprüche 1 bis 6, bei welcher die ein oder mehreren Werkzeuge und/oder Säeinheiten (40) abnehmbar an der Bestellkombination (10) gehalten sind.

8. Bestellkombination nach einem oder mehreren der Ansprüche 1 bis 7, umfassend ein oder mehrere Arbeitswerkzeuge (28, 30) zur Lockerung des Erdreichs, welche ein oder mehreren Arbeitswerkzeuge (28, 30) an den Maschinenrahmen (24) gekoppelt und den ein oder mehreren Packereinheiten (32) in Fahrtrichtung (12) der Bestellkombination (10) vorgeordnet sind.

9. Verfahren zum Überführen einer gemäß einem der Ansprüche 1 bis 8 gebildeten landwirtschaftlichen Bestellkombination (10) aus einer Transportposition (TP) in eine Arbeitsposition (AP) und umgekehrt, welche Bestellkombination (10) ein oder mehrere Packereinheiten (32) zur Verdichtung einer Bodenfläche und ein oder mehrere den Packereinheiten (32) in Fahrtrichtung (12) nachgeordnete Werkzeuge zur Bearbeitung eines Erdreichs und/oder Säeinheiten (40) zur Verteilung von Saatgut und/oder Dünger besitzt, die gegenüber den ein oder mehreren Packereinheiten (32) eine bestimmte Höhendifferenz besitzen, wobei das Überführen in die Arbeits- oder Transportposition (AP, TP) und umgekehrt durch ein jeweiliges gemeinsames Heben oder Senken der ein oder mehreren Packereinheiten (32) zusammen mit den ein oder mehreren Werkzeugen und/oder Säeinheiten (40) erfolgt, bei welchem jeweiligen gemeinsamen Heben oder Senken die jeweilige bestimmte Höhendifferenz zwischen den ein oder mehreren Packereinheiten (32) und den ein oder mehreren Werkzeugen und/oder Säeinheiten (40) zumindest weitgehend unverändert oder annähernd beibehalten wird, **dadurch gekennzeichnet, dass** die Bestellkombination (10) durch ein gemeinsames Senken der ein oder mehreren Packereinheiten (32) zusammen mit den ein oder mehreren Werkzeugen und/oder Säeinheiten (40) in die Transportposition (TP) überführbar ist, wobei in der Transportposition (TP) eine oder mehrere der Packereinheiten (32) als Reifen zur tragenden Führung der Bestellkombination (10) mit einer Bodenfläche in Kontakt stehen.

10. Verfahren nach Anspruch 9, bei welchem die Bestellkombination (10) wenigstens ein den ein oder mehreren Packereinheiten (32) und den ein oder mehreren Werkzeugen und/oder Säeinheiten (40) in Fahrtrichtung (12) der Bestellkombination (10) vorgeordnete Arbeitswerkzeuge (29, 30) umfasst,

11. Verfahren nach Anspruch 9 oder 10, bei welchem die bestimmte Höhendifferenz zwischen den ein oder mehreren Packereinheiten (32) und den ein oder mehreren Werkzeugen und/oder Säeinheiten (40) durch ein oder mehrere Stellglieder (41) definiert vorgegeben wird.

12. Verfahren nach Anspruch 11, bei welchem vor und/oder während einem Überführen der Bestellkombination (10) in die Transportposition (TP) eine Vergrößerung der Höhendifferenz zwischen den ein oder mehreren Werkzeugen und/oder Säeinheiten (40) und den ein oder mehreren Packereinheiten (32) durch die ein oder mehreren Stellglieder (41) bewirkt wird.

## Claims

1. A towed agricultural combination cultivator (10) for tillage and/or for spreading of seeds and/or fertilisers, the combination cultivator (10) comprising
- a machine frame (24), to which a suspension (46) formed as a parallelogram is connected in a liftable and lowerable manner, the suspension (46) consisting of at least one upper link (48), at least one lower link (50), as well as a carrier frame (37) extending at a right angle in relation to the driving direction (12) of the combination cultivator (10), as well as
- one or more packer units (32) for soil compaction, the packer units (32) being connected to the carrier frame (37) of the suspension (46), and one or more mounting devices (38) disposed downstream in driving direction (12) from the packer units (32) and connected to the carrier frame (37) of the suspension (46), by means of which mounting devices (38) one or more sowing units (40) for the distribution of seeds and/or fertilisers on the soil and/or one or more implements for soil tillage are coupled with the carrier frame (37),
wherein the at least one upper link (48) and the at least one lower link (50) are each coupled by way of joints (54, 56), with the axes of rotation oriented to the greatest possible extent at a right angle to the driving direction (12) and parallel to each other, to the machine frame (24) and to the carrier frame (37) in such a way that a lifting and lowering of the suspension (46) is effectible by means of at least one actuator, with the angular position of the carrier frame (37) at least to the greatest possible extent unchanged,
**characterised in that** the combination cultivator (10) is convertible to a transport position (TP) by way of a lowering movement of the suspension (46), wherein one or more packer units (32) with the transport position (TP) assumed are in contact with a ground surface and formed as tyres for road travel of the combination cultivator (10), and wherein the one or more sowing units (40) and/or the one or more implements with the transport position (TP) assumed are raisable relative to the ground surface so that they have no contact to the ground surface, and wherein the one or more packer units (32), being formed as one or more rotating packer tyres (36) that are rigidly connected to the carrier frame (37), are in contact with a ground surface for supported movement of the combination cultivator (10).

2. The combination cultivator according to claim 1, in which the one or more packer units (32) and/or the one or more sowing units (40) and/or implements are rigidly connected to the carrier frame (37), or in which the one or more packer units (32) and/or the one or more sowing units (40) and/or implements are connected to the carrier frame (37) in a swivelably movable manner.

3. The combination cultivator according to claim 1 or 2, in which the upper link (48) and/or the lower link (50) is formed by at least two carrying arms that are oriented parallel to each other and mechanically coupled to one another.

4. The combination cultivator according to one or more of the claims 1 to 3, in which at least one actuator (52) for lifting and lowering of the suspension (46) is coupled to the lower link (50) and/or to the upper link (48) and/or to the carrier frame (37) as well as to the machine frame (24).

5. The combination cultivator according to claim 4, in which the packer tyres (36) are disposed on a common carrying axle that is oriented at a right angle to the driving direction (12) of the combination cultivator (10).

6. The combination cultivator according to one or more of the claims 1 to 5, in which the one or more implements and/or sowing units (40) and/or the one or more packer units (32) are brought into operative connection with one or more actuators (41), via which a difference in height is specifiable in a defined manner for the one or more implements and/or sowing units (40) relative to the one or more packer units (32).

7. The combination cultivator according to one or more of the claims 1 to 6, in which the one or more implements and/or sowing units (40) are held in a detachable manner at the combination cultivator (10).

8. The combination cultivator according to one or more of the claims 1 to 7, comprising one or more work implements (28, 30) for soil loosening, which one or more work implements (28, 30) are coupled to the machine frame (24) and disposed upstream from the packer units (32) in driving direction (12) of the combination cultivator (10).

9. A method for conversion of an agricultural combination cultivator (10) designed according to one of the claims 1 to 8 from a transport position (TP) to a work position (AP) and vice versa, which combination cultivator (10) has one or more packer units (32) for compaction of a ground surface, and one or more implements for soil tillage and/or sowing units (40) for the distribution of seeds and/or fertilisers, which implements and/or sowing units (40) are disposed downstream in driving direction (12) from the packer units (32), and which implements and/or sowing units (40) have a specific difference in height relative to the one or more packer units (32), wherein the conversion to the work position or transport position (AP, TP) and vice versa is carried out in each case by a common lifting or lowering of the one or more packer units (32) together with the one or more implements and/or sowing units (40), in which in each case common lifting or lowering the in each case specific difference in height between the one or more packer units (32) and the one or more implements and/or sowing units (40) is maintained at least largely unchanged or approximately the same, **characterised in that** the combination cultivator (10) is convertible to the transport position (TP) by a common lowering of the one or more packer units (32) together with the one or more implements and/or sowing units (40), wherein one or more packer units (32) in the transport position (TP) are formed as tyres and are in contact with a ground surface for supported guidance of the combination cultivator (10).

10. The method according to claim 9, in which the combination cultivator (10) comprises at least one work implement (28, 30) disposed upstream, in driving direction (12) of the combination cultivator (10), from the one or more packer units (32) and the one or more implements and/or sowing units (40).

11. The method according to claim 9 or 10, in which the specific difference in height between the one or more packer units (32) and the one or more implements and/or sowing units (40) is specified in a defined manner by one or more actuators (41).

12. The method according to claim 11, in which an increase of the difference in height between the one or more implements and/or sowing units (40) and the one or more packer units (32) is effected by the one or more actuators (41) prior to and/or during a conversion of the combination cultivator (10) to the transport position (TP).

## Revendications

1. Semoir combiné agricole tracté (10) pour le travail du sol et/ou pour l'épandage de semences et/ou d'engrais, comprenant
- un châssis de machine (24) avec lequel est reliée de manière élevable et rabaissable une suspension (46), réalisée sous forme de parallélogramme et composée d'au moins une traction supérieure (48), d'au moins une traction inférieure (50) ainsi que d'un cadre-porteur (37) s'étendant perpendiculairement au sens de la marche (12) du semoir combiné (10), ainsi
- qu'un ou plusieurs rouleaux (32) reliés au cadre-porteur (37) de la suspension (46) pour compacter un sol, et un ou plusieurs dispositifs de montage (38) agencés, dans le sens de la marche (12), en aval des rouleaux (32) et reliés au cadre-porteur (37) de la suspension (46), au moyen desquels sont couplés au cadre-porteur (37) un ou plusieurs éléments semeurs (40) pour la distribution de semences et/ou engrais sur le sol, et/ou un ou plusieurs outils pour le travail du sol,
l'au moins une traction supérieure (48) et l'au moins une traction inférieure (50) étant couplées respectivement, par des joints articulés (54, 56) à axes de rotation sensiblement perpendiculaires au sens de la marche (12) et orientés de manière parallèle les uns aux autres, au châssis de la machine (24) et au cadre-porteur (37) de telle sorte qu'il est possible d'activer un levage et un abaissement de la suspension (46) au moyen d'au moins un actionneur à position de rotation du cadre-porteur (37) au moins sensiblement inchangée,
**caractérisé en ce que** le semoir combiné (10) peut être transposé dans une position de transport (TP) par le biais d'un mouvement d'abaissement de la suspension (46), un ou plusieurs rouleaux (32) étant, en position de transport (TP), en contact avec une surface de sol et étant réalisés sous forme de pneus pour un trajet sur route du semeur combiné (10), et l'un ou les plusieurs éléments semeurs (40) et/ou l'un ou les plusieurs outils pouvant, en position de transport (TP), être soulevés de la surface du sol, de sorte à ne pas être en contact avec la surface du sol, et
l'un ou les plusieurs rouleaux (32) étant en contact avec une surface de sol en tant qu'un ou plusieurs pneus de rouleau (36) tournant et reliés de manière fixe au cadre-porteur (37), pour déplacer de manière portante le semoir combiné (10).

2. Semoir combiné selon la revendication 1, dans lequel l'un ou les plusieurs rouleaux (32) et/ou l'un ou les plusieurs éléments semeurs (40) et/ou outils sont en liaison fixe avec le cadre-porteur (37) ou dans lequel l'un ou les plusieurs rouleaux (32) et/ou l'un ou les plusieurs éléments semeurs (40) et/ou outils sont en liaison pivotante avec le cadre-porteur (37).

3. Semoir combiné selon la revendication 1 ou 2, dans lequel la traction supérieure (48) et/ou la traction inférieure (50) sont formées par au moins deux bras porteurs orientés de manière parallèle l'un à l'autre et couplés mécaniquement l'un à l'autre.

4. Semoir combiné selon l'une quelconque ou plusieurs des revendications 1 à 3, dans lequel au moins un actionneur (52) pour soulever et abaisser la suspension (46) est couplé à la traction inférieure (50) et/ou à la traction supérieure (48) et/ou au cadre-porteur (37) ainsi qu'au châssis de la machine (24).

5. Semoir combiné selon la revendication 4, dans lequel les pneus de rouleaux (36) sont agencés sur un essieu porteur commun et orienté au droit du sens de marche (12) du semoir combiné (10).

6. Semoir combiné selon l'une quelconque ou plusieurs des revendications 1 à 5, dans lequel l'un ou les plusieurs outils et/ou éléments semeurs (40) et/ou l'un ou les plusieurs rouleaux (32) sont mis en coopération avec un ou plusieurs actionneurs (41) via lesquels un ou plusieurs actionneurs (41) une différence de hauteur de l'un ou des plusieurs outils et/ou éléments semeurs (40) par rapport à l'un ou les plusieurs rouleaux (32) peut être donnée prédéterminée.

7. Semoir combiné selon l'une quelconque ou plusieurs des revendications 1 à 6, dans lequel l'un ou les plusieurs outils et/ou éléments semeurs (40) sont maintenus de manière détachable au semoir combiné (10).

8. Semoir combiné selon l'une quelconque ou plusieurs des revendications 1 à 7, comprenant un ou plusieurs outils de travail (28, 30) pour ameublir le sol, lequel un outil de travail ou lesquels plusieurs outils de travail (28, 30) sont couplés au châssis de la machine (24) et sont agencés, dans le sens de la marche (12) du semoir combiné (10), en amont de l'un ou des plusieurs rouleaux (32).

9. Procédé destiné à transposer un semoir agricole combiné (10), formé selon l'une quelconque des revendications 1 à 8, d'une position de transport (TP) dans une position de travail (AP) et inversement, lequel semoir combiné (10) possède un ou plusieurs rouleaux (32) pour compacter une surface de sol et un ou plusieurs outils agencés, dans le sens de marche (12), en aval des rouleaux (32) pour travailler un sol, et/ou des éléments semeurs (40) pour distribuer des semences et/ou engrais, et qui possèdent une différence de hauteur déterminée par rapport à l'un ou aux plusieurs rouleaux (32), le transfert dans la position de travail ou de transport (AP, TP) et inversement s'effectuant par un soulèvement ou abaissement communs respectifs de l'un ou des plusieurs rouleaux (32) avec l'un ou les plusieurs outils et/ou éléments semeurs (40), dans lequel soulèvement ou abaissement respectif commun la différence de hauteur respective définie entre l'un ou les plusieurs rouleaux (32) et l'un ou les plusieurs outils et/ou éléments semeurs (40) reste au moins sensiblement inchangée ou approximativement, **caractérisé en ce que** le semeur combiné (10) peut être transposé par un abaissement commun de l'un ou des plusieurs rouleaux (32), avec l'un ou les plusieurs outils et/ou éléments semeurs (40), dans la position de transport (TP), dans ladite position de transport (TP) un ou plusieurs des rouleaux (32) étant, en tant que pneus, en contact avec une surface de sol pour guider le semoir combiné (10) tout en le portant.

10. Procédé selon la revendication 9, dans lequel le semoir combiné (10) comprend au moins un outil de travail (28, 30) agencé en amont, dans le sens de la marche (12) du semoir combiné (10), de l'un ou des plusieurs rouleaux (32) et de l'un ou des plusieurs outils et/ou éléments semeurs (40).

11. Procédé selon la revendication 9 ou 10, dans lequel la différence de hauteur déterminée entre l'un ou les plusieurs rouleaux (32) et l'un ou les plusieurs outils et/ou éléments semeurs (40) est donnée prédéterminée par le biais d'un ou de plusieurs actionneurs (41).

12. Procédé selon la revendication 11, dans lequel avant et/ou pendant un transfert du semoir combiné (10) dans la position de transport (TP), un agrandissement de la différence de hauteur entre l'un ou les plusieurs outils et/ou éléments semeurs (40) et l'un ou les plusieurs rouleaux (32) est obtenue par le biais de l'un ou des plusieurs actionneurs (41).
